# EUROPEAN PATENT APPLICATION

(11) **EP 3 747 274 A1**
(43) Date of publication of application: **09.12.2020**
(21) Application number: 20460026.6
(22) Date of filing: 05.06.2020
(51) Int. Cl.: A23F 5/26, A47J 31/06, A47J 31/24

(54) **A METHOD FOR MACERATING COLD COFFEE AND A DEVICE FOR THE IMPLEMENTATION THEREOF**

(30) Priority: 05.06.2019 PL 43015219
(71) Applicant: Hard Beans Coffee Roasters Sp. z o.o., 45-071 Opole (PL)
(72) Inventor: Matejuk, Rafal, 46-022 Luboszyce (PL); Andrzejewski, Dariusz, 48-340 Glucholazy (PL); Jamnicki, Waldemar, 48-300 Nysa (PL); Barabosz, Krzysztof, 45-404 Opole (PL); Duszak, Maciej, 53-509 Wroclaw (PL); Porada, Artur, 45-037 Opole (PL); Stanislawski, Piotr, 45-033 Opole (PL); Jop, Katarzyna, 45-317 Opole (PL); Kucia, Marcin, 45-759 Opole (PL); Kalla, Tomasz, 46-024 Kolanowice (PL); Porada, Katarzyna, 45-739 Opole (PL); Jaciw, Krzysztof, 45-763 Opole (PL); Jaczewski, Pawel, 40-004 Katowice (PL); Bartelak, Filip, 31-154 Kraków (PL)
(74) Representative: Rozbicki, Robert

(57) **Abstract**

The method for preparing cold coffee involves ground coffee being placed in the maceration basket 1, which is motionlessly arranged in the maceration tank 4 and subjected to maceration by the flow of water pumped by means of the pump 9 to the hydrating head 3 mounted centrally inside the maceration basket 1, wherein during the maceration the maceration fluid is recirculated from the maceration tank 4 to maceration basket 1. The maceration basket 1 is completely immersed in the maceration fluid.

A device for preparing cold coffee has a maceration tank 4, in which a maceration basket 1 for ground coffee is motionlessly arranged, consisting of an external support portion 2 and an internal portion made of rigid mesh, wherein the feeding means is a hydrating head 3 placed centrally inside the maceration basket 4. The device is adapted to operate under increased pressure inside the maceration basket 1. In a preferable embodiment for use in a café, for example, the maximum pressure inside the maceration basket is 23 bars.

## Description

The invention relates to a method for macerating cold coffee and a device for the implementation thereof.

Obtaining cold coffee involves subjecting ground coffee to a maceration process using a solvent such as water at low temperature, such as room temperature by way of example. The method of separation of a chemical substance from a solution or mixture of solids is an extraction. Maceration is one method of extraction and generally consists of subjecting a mixture of solids containing the substance to be extracted to solvent treatment and then draining the macerating fluid from the non-dissolved residue. The efficiency of the macerating process can be increased for example by grinding the solids from which the extract is to be macerated and by stirring during maceration. A more complete maceration can be achieved by repeating the process a plurality of times. Various types of maceration were used in cold coffee production processes.

Step maceration was used according to the invention described in patent application US2019053511 A1 (publication dated 2019-02-21). According to the method presented, a beverage from ground-coffee is cold prepared by soaking coffee in water over a long period (over a dozen hours) in a series of filter bags, with individual bags being soaked in clean water, the resulting maceration fluid, after removing the bag, which undergoes further maceration in clean water, is treated with various additives (e.g. pH buffers, enzymes, anti-foaming agents), or is exposed to a higher temperature, then used to soak further bags.

Shorter maceration time may be achieved for example through dynamic maceration. US patent application US2019075957 (A1) (publication dated 2019-03-14) shows a device containing a container and an elongated basket, lined with mesh, for placement of maceration material. The basket is attached to the cover of the container. The cover has a mechanism for rotating the basket. The container is filled with water. The movement of the maceration material while submerged in water significantly reduces the time needed for cold maceration.

Patent description KR101696190 (B1) (Publication 2017-01-13) presents a device for rapid maceration of cold coffee using high-pressure water. The controlled pressure of the water supplied to the maceration container is between 10 and 50 bar. In addition, this invention uses maceration of coffee with alkaline water produced by supply water ionisation.

Another invention regarding the preparation of cold coffee is presented in CN108618617 (A) (publication dated 2018-10-09). The design of the coffee machine according to the CN '617 is based on the design of a well-known coffee machine, which is suitable for obtaining both cold and hot coffee. During the process of cold coffee maceration, the inside of the maceration chamber is isolated from the atmosphere, and cold water under high pressure enters the maceration chamber from one end, and once coffee is extracted, the maceration fluid flows out from the other end of the maceration chamber. Coffee maceration time can be controlled by the operation time of the electric pump. The applied pressure according to this invention is between 1.5 bar and 20 bar.

The JP2012239470 (A) description (published in 2012) presents a universal machine for making cold and hot coffee, with a pressure used ranging from 0.1 to 50 bar (preferably 0.5 to 15 bar).

According to the review of the inventions of methods for obtaining cold coffee, the maceration time has been successfully reduced by using e.g. high pressure or negative pressure (expensive methods). It was also achieved by fluid mixing or movement of coffee particles in a stationary liquid, which, however, requires the use of a motor and moving parts, resulting in increased costs and reduces reliability of the device.

The aim of the invention is to obtain an inexpensive and as much as possible reliable device for producing high-quality cold coffee, without additives, which would be suitable for use in cafés and food industry. The premise was to achieve an optimal production time of cold-extracted coffee for use in cafés, such as between 1 hour to at most 2 hours.

The device, according to the invention, has met these requirements.

In a disclosed cold coffee production method, ground coffee is placed in a mesh filter container, undergoes a process of flow-through maceration with water, using increased pressure, is characterised in that the ground coffee is placed in a maceration basket, which is motionlessly arranged in the maceration tank and is subjected to maceration by the flow of water pumped into the hydrating head centrally mounted inside the maceration basket, wherein during the maceration the maceration fluid is recirculated from the maceration tank to the hydrating head, and the maceration basket is immersed in the maceration fluid. The rate of the fluid flow through the hydrating head used is between 2 and 25 L/min, preferably between 6 and 14 L/min. The operating temperature preferably is between 16 °C and 35 °C.

Preferably, the operation of the maceration unit is controlled by a controller, with the desired operation time being set according to the parameters of the coffee batch.

Preferably, after a pre-determined maceration time, the maceration fluid is streamed outside of the maceration tank into the finished cold coffee container, and when the maceration tank is emptied, the maceration basket with coffee grounds intended for other uses is removed, after which the container is switched to automatic washing.

According to the invention, a device for cold coffee production having a maceration tank containing a maceration basket and the means for feeding fluid to the device and the means for receiving the maceration fluid is characterised in that a maceration basket for ground coffee is motionlessly mounted in the maceration tank, consisting of an external support part and an internal part made up of at least one layer of rigid mesh. The liquid feeding means is a hydrating head located centrally inside the maceration basket, wherein the device is adapted to operated under increased pressure inside the maceration basket. Preferably, the hydrating head is surrounded by a rigid mesh.

Preferably, the device is adapted to operate under increased pressure inside the maceration basket from 1 to 22 bar, usually from 2 to 6 bar.

In a preferable embodiment, the device is adapted to work under increased pressure inside the maceration basket from 1 to 29 bar.

Preferably, the external support portion of the maceration basket has an openwork structure, with the mesh hole size adjusted to the rigidity of the internal mesh at maximum pressure during operation of the device.

Preferably, the maceration tank is rounded in shape.

The maceration basket has a top-side closure preferably consisting of a structural and mesh portions corresponding to the side walls and bottom thereof.

In a preferable embodiment, the maceration basket is rounded in shape.

The diameter of the internal mesh hole is preferably selected to match the coarseness of the ground coffee and ranges from 10 µm to 500 µm.

Most preferably, the hydrating head is detachably mounted in the bottom of the maceration basket.

The line for discharging fluid from the maceration tank, arranged at the bottom thereof, is preferably coaxial to the line supplying the hydrating head and is external thereto.

As shown above, ground coffee according to the invention is macerated by placing it in the maceration basket and hydrating it by flow-through under pressure from the inside of the maceration basket, with the latter immersed in the maceration fluid in the maceration tank, and the maceration fluid is recirculated to the hydrating head during the process. The basket is covered from the inside with a fine, rigid mesh, which does not yield under the pressure from the inside of the basket due to an external support portion made as an openwork solid structure calculated to withstand the highest pressures present in the inside. The maceration basket is filled to the brim and closed with a cover similar in structure to that of the walls and bottom of the maceration basket. Hydration, as mentioned above, is carried out from the center of the maceration basket using a hydrating head. The term "hydrating head" denotes for example a mandrel with holes and/or various types of nozzles or, for example, a nozzle set and the like. The hydrating head is designed to inject, under pressure, evenly, water/maceration fluid into the ground coffee enclosed in the basket. The water ejected from the head first encounters a high resistance from the dry coffee batch, but when water paths are formed between coffee particles, the water begins to penetrate deep into the batch, the particles swell, and the pressure inside the basket increases. The increase in pressure allows each coffee particle to be penetrate more thoroughly. This promotes faster maceration of desired components from individual coffee particles. The holes of the rigid mesh lining the inside of the maceration basket is selected so that before swelling the smallest particles of coffee penetrate through it into the maceration fluid in the tank. After some time, both small and larger particles swell and cause the pressure in the basket to rise. The smallest particles recirculated with the maceration fluid through the hydrating head to the maceration basket are gradually retained by the increasingly tightly packed coffee batch, and are also already retained by the mesh and deposit on it. This forms a natural filter both inside the batch and on the mesh itself. At the end of the maceration, all the particles are already inside the basket, and the liquid cold coffee obtained after the maceration is a finished product, which does not need to be filtered.

The pumping of the maceration fluid through the coffee bed is repeated until water is sufficiently saturated with coffee macerate. A pump forcing the flow of the maceration fluid was selected for the operation of the system. Due to the rinsing of natural oils and the formation of a film covering the walls of the maceration tank, the unit must be washed after each maceration. In a preferable embodiment of the invention, the maceration tank is cleaned automatically.

In preferable embodiments of the device, two sizes of basket and tank were presented. One is designed for 8 to 10L water, and the other for 18 to 20L water. The basket is made of chromium and cupronickel steel. The mesh on the inside of the basket is made of stainless metal materials, however plastic mesh suitable for contact with foodstuffs may also be used. Optionally, the maceration basket has a rotate-and-lock coupling in the bottom portion for quick assembly and disassembly.

This is provided to make it easier for the operator to take out and load the basket with coffee as well as to empty the contents of the basket in the form of spent coffee grounds remaining after the maceration. In the simplest and most preferable example, the hydrating head is a mandrel, which has a plurality of holes, arranged alternately on the mandrel sides. Preferably the holes are arranged along a helical pattern to ensure that the coffee batch soaks evenly. The mandrel holes are surrounded by a mesh to guard from clogging by coffee particles.

The invention will be explained in the embodiment example of the method and embodiment example of the device according to the invention shown in the drawing, in which:

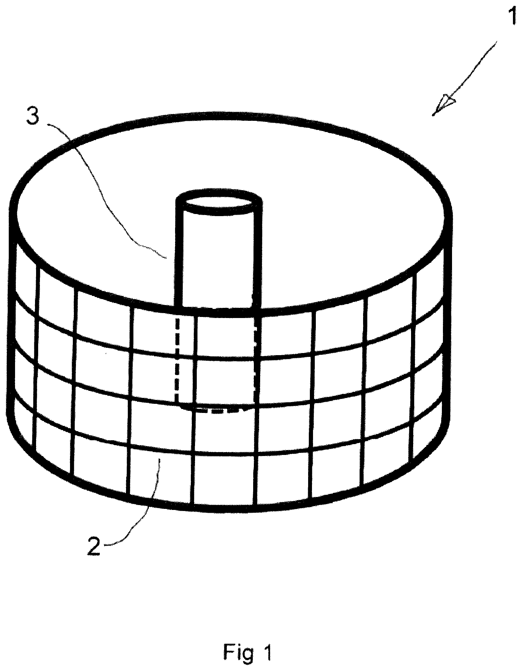

fig. 1 schematically shows the basket with the hydrating head in the axonometric view.

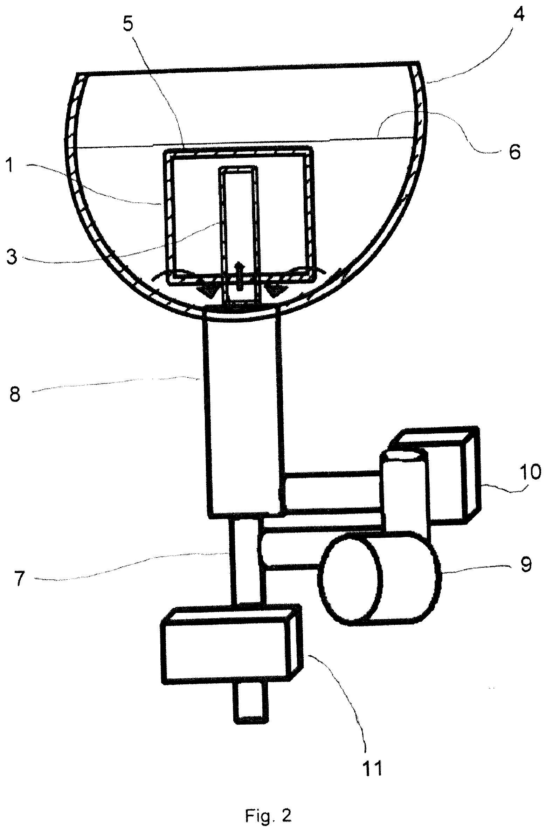

fig. 2 is a schematic representation of the section through the tank and further parts of the device.

The maceration basket 1 consists of a support part 2 and an internal part lined with a fine rigid grid (not marked in the picture). A hydrating head 3 is mounted onto the maceration basket 1, ground coffee is placed in the maceration basket 1 which is then placed in the maceration tank 4, and the hydrating head 3 is connected to the supply line 7. Ground coffee is placed in the maceration basket 1 until it is full and closed with a cover 5. The maceration basket 1 is motionlessly mounted to the bottom of the maceration tank 4. Baskets of different capacities can be placed in a given tank, and the amount of water is adjusted accordingly, so that an optimal, known maceration ratio is maintained between the amount of water and coffee, namely about 60 g of coffee per 1 L of water, wherein the whole maceration basket needs to be submerged in water, that is to say must be under the water level 6. When the entire quantity of water to be macerated with a particular basket is inserted into the maceration tank 4 through the line 7 and the hydrating head 3, the pump 9 starts to recirculate the maceration fluid from the maceration tank 4 through the discharge pipe 8 to the pump 9 and through the line 7 to the hydrating head 3. In the disclosed embodiment, the hydrating head 3 is surrounded by a mesh, so that the coffee particles do not clog the hydrating holes. The maceration time is experimentally predetermined for the individual coarsenesses of ground coffee, taking into account the expected quality of the final product. The maceration time is a parameter set for automatic process control. After this time period is over, a solenoid valve 10 cuts off the recirculation of the maceration fluid to the maceration tank 4, and a solenoid valve 11 directs the maceration fluid to the keg. After manually removing the maceration basket 1 with coffee grounds, the maceration tank 4 is automatically washed. Coffee grounds can be further used in a variety of applications (e.g. gardening, cosmetics) and are transferred to suitable containers. After washing, the unit is ready for a new process of preparing cold coffee.

According to the invention, the macerating device is an inexpensive medium-sized device, achieving good product quality parameters and short preparation time compared to similar solutions. It has a low failure rate since the process involves no moving parts. It is suitable for use in cafés given its dimensions: it is similar in size to a dishwasher or an other auxiliary device, as well as the production rate achieved. This is vital for this type of customer due to the possibility of adjusting the quantity of cold produced coffee to demand.

## Claims

1. A method for preparing cold coffee, wherein ground coffee is placed in a mesh filter container, undergoes a process of flow-through maceration with water at room temperature, using increased pressure, **characterised in that** ground coffee is placed in a maceration basket 1, which is motionlessly arranged in the maceration tank 4 and is subjected to maceration by the flow of water pumped into the hydrating head 3 centrally arranged inside the maceration basket 1, wherein during the maceration the maceration fluid is recirculated from the maceration tank 4 to the hydrating head 3, and the maceration basket 1 is immersed in the maceration fluid.

2. The method according to claim 1 **characterised in that** the rate of the fluid flow through the hydrating head 3 used is between 2 and 25 L/min, preferably between 6 and 14 L/min.

3. The method according to claim 1 **characterised in that** the working temperature is most preferably between 16 °C and 35 °C.

4. The method according to claim 1 **characterised in that** the operation of the maceration unit is controlled by a controller, with the desired operation time being set according to the parameters of the coffee batch.

5. The method according to claim 1 **characterised in that** after a predetermined maceration time, the maceration fluid is streamed outside into a tank for finished cold coffee.

6. The method according to claim 1 **characterised in that** after the maceration tank 4 is emptied, the maceration basket 1 with coffee grounds intended for other applications is removed, and the maceration tank 4 is switched to automatic washing.

7. A device for making cold coffee having a maceration tank containing a maceration basket and the means for feeding fluid to the device and the means for receiving the maceration fluid, **characterised in that** there is a maceration basket 1 for ground coffee motionlessly mounted in the maceration tank 4 consisting of an external support part 2 and an internal part made up of at least one layer of rigid mesh, wherein the feeding means is the hydrating head 3 placed centrally inside the maceration basket 1, wherein the device is adapted to operate under increased pressure inside the maceration basket 1.

8. The device according to claim 7 **characterised in that** the hydrating head is surrounded by a rigid mesh.

9. The device according to claim 7 **characterised in that** the device is adapted to work under increased pressure inside the maceration basket from 1 to 22 bar, usually from 2 to 6 bar.

10. The device according to claim 7 **characterised in that** the device is adapted to work under increased pressure inside the maceration basket from 1 to 29 bar.

11. The device according to claim 7 **characterised in that** the support portion of the maceration basket has an openwork structure, with the mesh hole size adjusted to the rigidity of the internal mesh at maximum pressure during operation of the device.

12. The device according to claim 7 **characterised in that** the maceration tank is rounded in shape.

13. The device according to claim 7 **characterised in that** the maceration basket has a top-side closure consisting of a structural and mesh portions corresponding to the side walls and bottom.

14. The device according to claim 7 **characterised in that** the maceration basket has a rounded shape.

15. The device according to claim 7 **characterised in that** the diameter of the internal mesh hole is selected to match the coarseness of the ground coffee and ranges from 10 µm to 500 µm.

16. The device according to claim 7 **characterised in that** the hydrating head is detachably mounted in the bottom of the maceration basket.

17. The device according to claim 7 **characterised in that** the line for discharging fluid from the maceration tank, arranged at the bottom thereof, is coaxial to the line for supplying the hydrating head and is external to it.
